# EUROPEAN PATENT APPLICATION

(11) **EP 1 057 402 A1**
(43) Date of publication of application: **06.12.2000**
(21) Application number: 00830387.7
(22) Date of filing: 29.05.2000
(51) Int. Cl.: A01K 5/02

(54) **Automatic distributor for water, fodder, cookies, forage for animals in general and in partiular for dogs, with a low energy consumption.**

(30) Priority: 02.06.1999 IT RM990353
(71) Applicant: EffeGIEsse Project S.r.l., 00012 Guidonia Montecelio (IT)
(72) Inventor: Di Vozzo, Giovanni, 00012 Guidoni Montecelio, Roma (IT)

(57) **Abstract**

The present invention concerns an automatic distributor for water, fodder, cookies forage for animals in general and in particular for dogs, with low energy consumption, excellent reliability and major storage capacity. The reliability is assured by the simplicity of the operations by the absence of motors and mechanical wearing parts and, by the optimum combination system between the primary and secondary distributor. This allows the aliments to easily advace from the hopper to the funnel slide. The secondary machine rotation is guaranteed by a very simple rotary feeder with particularly favorable shapes. These shapes are able to receive and contain water that comes from the main water tank up to the movement caused by the gravity force. The water flow is controlled by an electric valve with low pressure purposely modified and by a digital programmer both with low energetic consumption. The whole system is held by a great quality of thermal insulation made to protect both the food and the electrical parts.

## Description

The present invention concerns an automatic distributor for water, fodder, cookies, forage for animals in general and dogs in particular with a low energy consumption excellent reliability and major storage capacity. It is well known that the automatic distributors for dog food existing on the market work by electrical motors and lead by accumulators, can't guarantee reliability and autonomy plus are subject to an high consumption. This machine has been created to answer the breeders and single owners needs to give them an automatic distributor for water, fodder, cookies, forage for animals in general and dogs in particular , fully functional with a very low cost , very reliable ,capable to warrant an elevated autonomy, without doing any manual operation for a minimum of 25 days. In the equipment main features appears evident the very low energy consumption. Indeed, not needing motors to function, but a simple electrical valve to control the water flow from the tank to the turbine, it solves at once, the problem of feeding food and water daily to the animal. The electrical valve generally used with pressures going from 0.5 to 10 bars purposely modified trough the substitution of membrane with a valve and relevant brass seats, will allow to bring down the operation to a pressure of 0 to 0.1 bars. The electrical valve works in continue current and impulse and absorbs very low periodic power (2 impulse of few tens of a second each every cycle of 24 hours),it's capable of operating for 6 or 7 months with a battery of 9 Volts.

The tank, situated in the upper part of the machine, next to the hopper, is connected to a water source, when full (approximately 60 liters ) the flow will be interrupted by a floating valve (catis type ). The move of the electrical valve, will allow the water flow through the turbine , which being charged very slowly will create a rotary movement with small and slow clicks. Such mechanism, as described later in details, excludes the possibility of jamming. In order to turn completely it needs approximately a liter of water and it takes less than 1 minute and 3 or 4 clicks.

It is such a rotating movement transmitted to a distributor, called "Secondary" that will allow the fodder to flow from the hopper and after going through a funnel connected to a slide is ready to arrive in the dog bowl. The flow to the dog bowl is controlled by an automatic anti-intrusion door. This one is opened after few seconds the first dose of fodder has arrived. The operations of this door, as described in details later on, will not allow the blocking in the close position.

The frequency of these impulses or doses are easily planned by a digital programmer situated in the upper part of the machine under the cover. An other particular characteristic of the finding is the weight; the machine built with best quality material weights 40 Kg but during the operations, therefore with the addition of water and fodder, reaches 120 Kg becoming well balanced and self standing equipment that not requires any ground fastening. The structure of the two prototypes is of excellent quality already realized and in operations since 8 moths ago. The efficiency criteria have been particularly taking care, keeping good overall sizes (60x60x90) with optimum capacities and autonomy. The finding is of easy construction , very versatile and allows at least two distribution systems (primary and secondary) used to mix different kind of aliments and capable to feed more than one animal with one digital system and only one electrical valve, lowering the energy consumption. It is also possible to apply over the top cover a solar panel of small dimensions and low costs that feeds the small battery, becoming a completely autonomous system. It is also applicable over a future model an acoustic signal operating always with a water system capable of recalling the attention of the animal when the food is ready. In order to maintain constant the water operating pressure , the main water tank can be split in two tanks laid upon each other where one feed the other connected by a floating valve. It is also possible to regulate the water flow over the turbine plying with a tap. We can also operate the distributor without the usage of the tanks, connecting directly the water system with an electrical valve also for high pressure, controlling that the water flow at the turbine with a tap. It is possible to operate a telephonic line by the usage of a micro switch supported on any device of the machine, allowing the communication with the animal.

Other advantages of the finding will appear more clearly in the following descriptions in forms of preferred but not exclusive construction given only with purposes of example shown in the 33 figures of the 6 drawings attached where the figures show :
fig.1 the operating mode of the invention, showing the essential parts and the most important details;
fig.2 the section view of the narrowing (21);
fig.3 top view of the primary distributor (16);
fig.4 lateral view of the primary distributor (16);
fig.5 front view of the primary distributor (16);
fig.6 front view of the secondary distributor (15);
fig.7 section view of the particular form of the small opening (62) of the secondary distributor of fig.6 (15);
fig.8 top view of the small opening of fig.7;
fig.9 front view of the small opening of fig.7;
fig.10 transversal section of the secondary distributor of fig. 6;
fig.11 lateral view (cover) of the secondary distributor of fig.6;
fig.12 electrical valve modified overall (42);
fig.13 electrical body shown in fig.12;
fig.14 modified seat of the electrical valve of fig.12;
fig.15 moving nucleus of the electrical valve ;
fig.16 nucleus holder of the electrical valve of fig.15;
fig.17 spool of the electrical valve;
fig.18 permanent magnet of the electrical valve;
fig.19 flat steel blocking the magnet of fig.18 and the spool of fig. 17 on the nucleus holder of fig. 16;
fig.20 seal (part of modification);
fig.21 top cover of the electrical valve;
fig.22 front view of fig.14
fig.23 lateral view of fig.14;
fig.24 front view of the valve (part of the modification);
fig.25 lateral view of the valve in fig.24;
fig.26 lateral view of the nucleus of fig. 15 with the valve of fig.24 assembled;
fig.27 top view of the turbine (34);
fig.28 transversal section of the turbine in fig.27;
fig.29 top view of the cylindrical box of the turbine;
fig.30 lateral view of the cylindrical box of the turbine in fig.29;
fig.31 lateral view of the cover in the cylindrical box of fig 29;
fig.32 front view of the cover (32) of fig.31 .

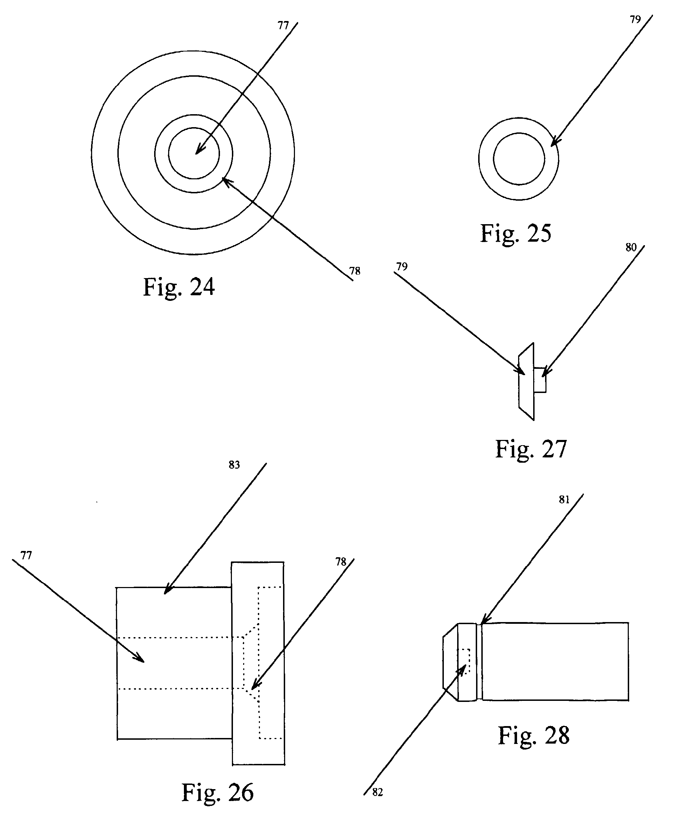

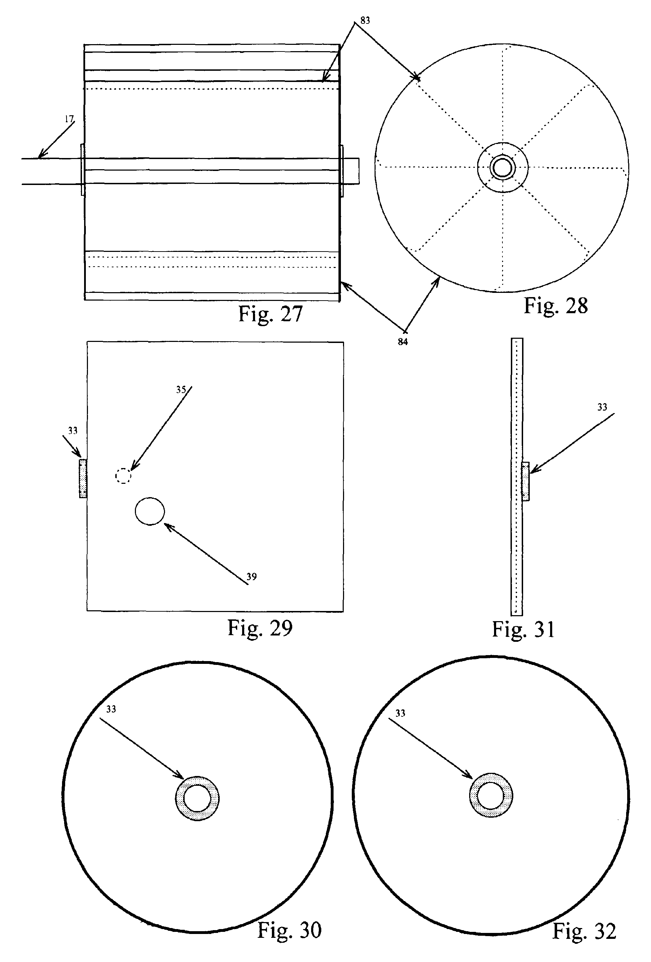

The upper tank (46),situated on the top of the electrical valve (42),inside which there is a valve (48), with a flotation device (47),is connected to the water supply (30) through a pipe (41). It is possible to count on a large (60 liters) autonomous upper tank (46).This warrants and maintain constant the pressure on the electrical valve (42) through a digital programmer (45), flowing through a cylindrical box (31) into a pipe (43) connected to a hole (39) starting the distribution cycle. The water is received by a turbine (34), remains on the blade's shoulder(83), fig.27 and fig. 29. The blades are charged until the counter clock rotating movement starts through the shaft (17) transmitted to the "Secondary" distributor. After the particular shape, second very important characteristic of the turbine (34) is in the construction material. Indeed the very low weight material used for the blades is suitable to optimize the ratio with the water weight .The blades connected directly on the shaft (17), are sealed on the borders with two flat steel plates (84),also very low in weight (a 0.3,0.4 mm thick aluminum, resin or steel plate can be suitable).

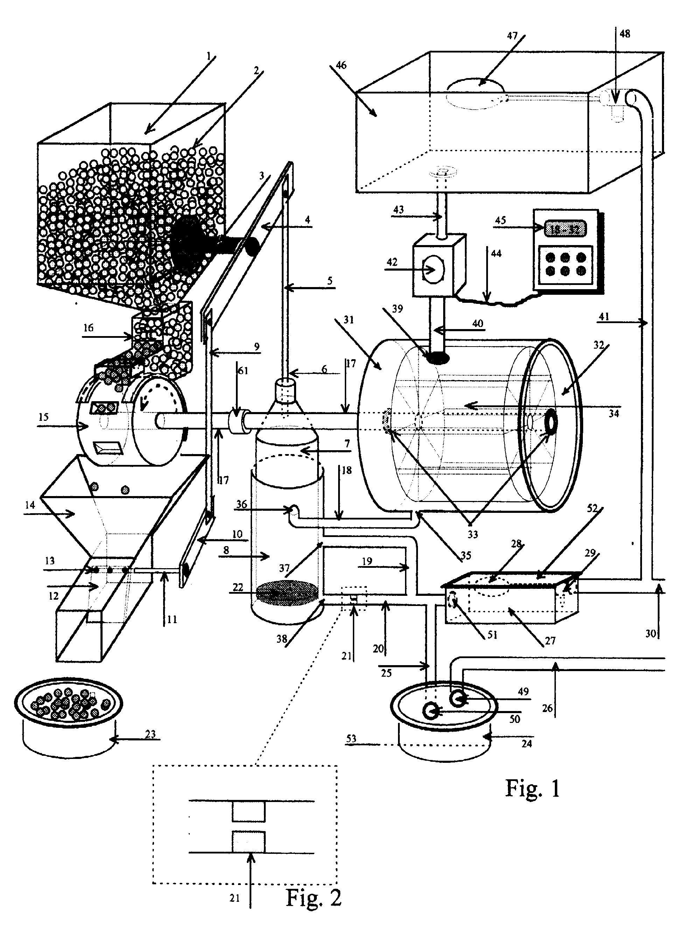

A single body completely sealed has to be realized with blades and plates. The construction of the turbine is particular but not difficult because is not subject to with stand mechanical forces other than the water flowing through the different compartments. Also for the shaft (17) There are not particular prescription in the material's choice. Pvc, steel , and other materials can be used. It is important to balance stiffness and weight .In this case an aluminum pipe ,diameter 40 mm. has been used. The bushing (33) are in teflon, fixed to the cylindrical box(31) and to the cover (32), allowing the shaft (17) free flowing. The electrical valve (42), regulates the flow from a minimum of 0.8 liter/minute to a maximum of 1.5 liter/minute depending on the calibration. The water slowly fitting the blades moves the turbine in small, slow clicks, of approximately a quarter of a turn each ; there is a movement when the blades are loaded at 7-8% of their full capacity. For this reason, the machine has the possibility, when necessary, to increase greatly and automatically his moving force without losing distribution cycle. In this way, chousing the size of the blades , we can affirm that the machine does not have any opportunity to choke, without automatically clearing, keeping stable the distribution cycle. In fig. 1 it is clearly shown the turbine lay out (34), inside the cylindrical box (3i)closed by the cover(32), are the bushing (33), inside which the shaft (17) runs. As explained before , the shaft (17) transmits the rotation movement to the secondary distributor, positioned vertically under the primary distributor. In the following pages we will call this "Distribution Group" (15-16).

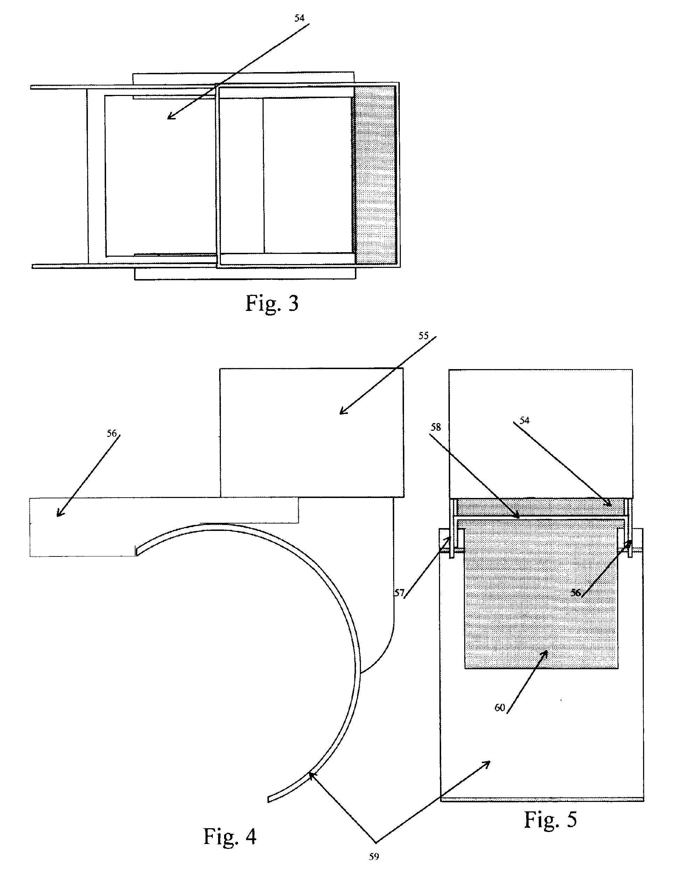

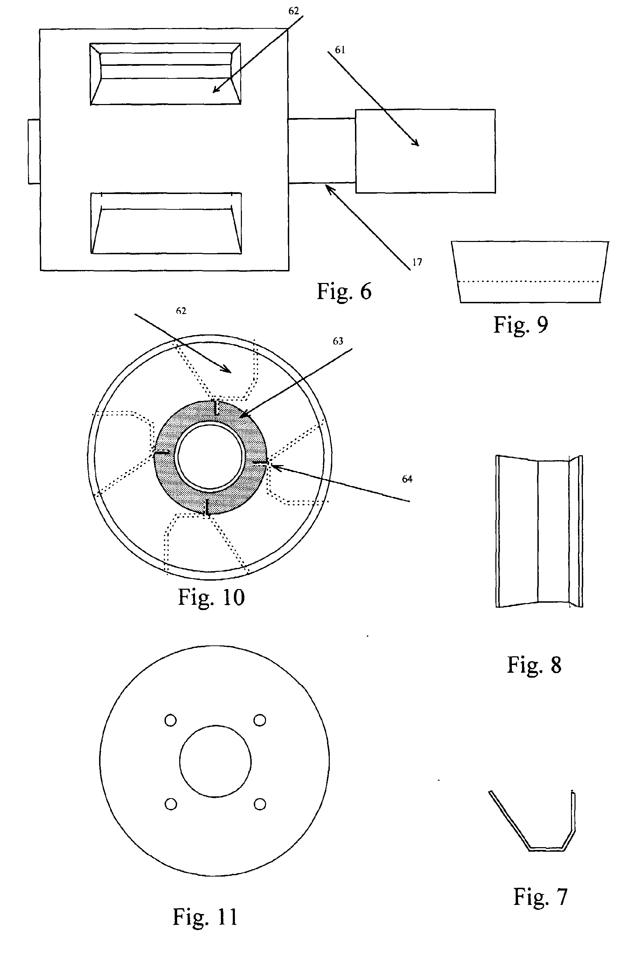

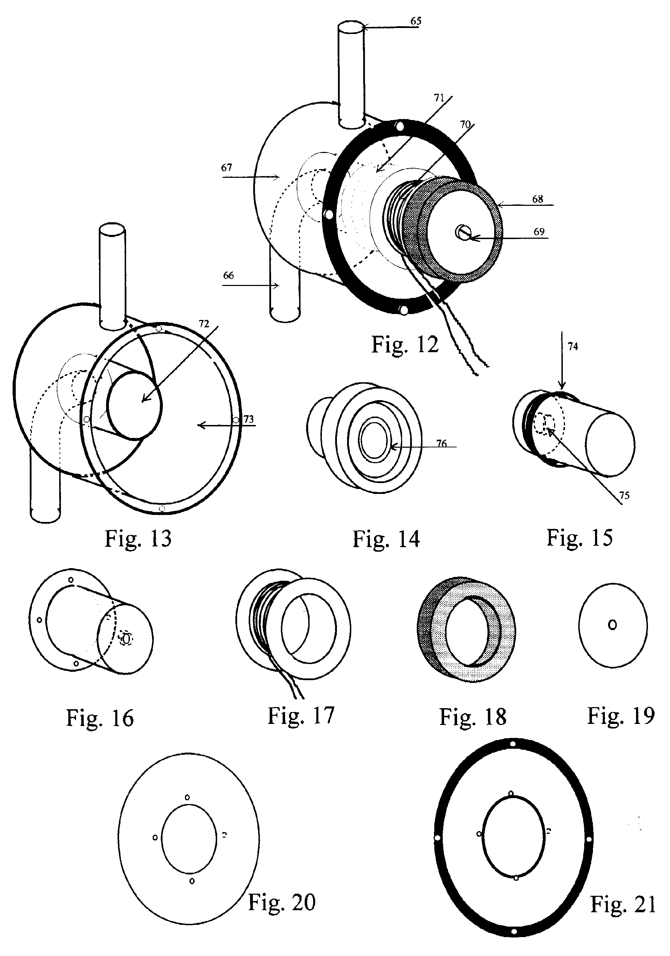

A very important part of the machine is the distribution group (15-16) that assigns particular efficiency and is needed to make the fodder (2) flowing from the hopper (i). Operates extremely easily because of the shape of the opening (62) applied as shown in fig. 6 and fig. 10 inside the metallic cylinder where are rectangular shaped breaks. The sizes of the openings are shown in figures 7, 8, 9, are inserted inside the breaks locked by a screw (64), on a cylindrical bearing. The lenght of the bearing is equal to the shortest part of the opening fig.9, where two flare can be found in the sides. Both cover tops of fig. 10 are inserted on the sides of the secondary distributor. Using the threaded poles is possible to get both cover tops near until they touch the opening's flare , going through the open space left between the openings . The plates of fig. 10 bring the alignment with the shaft (17) and the external part of the secondary distributor. Very particular is the shape of the openings, as can be noticed in fig.7, giving excellent reliability to the distribution group (15-16), easing the inlet and outlet for the opening (62) of the fodder . The coupling (61) brings together the shaft (17) of the turbine with the shaft of the secondary distributor, while the primary distributor (16) shown in figures 3, 4, 5 has a profile (54): suitable to ease the fodder flow, two lateral edges (56),(57) to bring it toward the funnel, the bracket (58) to connect them together and give stability. The upper part of the primary (16) is a glass (55). This cannot touch the inferior extremity of the hopper (1), allowing the best flowing of the fodder (2). The semicircular profile (59), of the secondary distributor (16), must have the same size of the internal upper radius. Same size of the radius of the secondary distributor (15), in such a way to behave as a free flowing bushing; through the rectangular opening (60), realized in the semicircular profile of the primary distributor (16) fig.5 the loading of the openings (62) is realized . It is very important, as stated before, that the primary distributor (16) , do not touch the hopper under any circumstance, therefore allowing the separation of the rest of the machine and, the optimum free flowing of the bushing. In order to connect the hopper (1) to the primary distributor (15) a soft rubber type sleeve can be used. It is possible to change some parameters of the distribution group (15,16) to adapt it to other kinds of food. The fodder being recovered by the slide with the funnel (14), using an automatic gate (12), reaches the bowl (23), if it is open. Typical of the automatic system controlling the gate, (see fig.1) is the particular cylindrical tank (8), where the water coming from the reservoir (31), through the hole (35), through the pipe (18) reaching the tank (8), in the position (36). The water level in the cylindrical tank (8) goes up to the point (37), because a restriction (31) is present in the pipe (20). These can be seen in the enlarged figure 2; the maximum flow is 0.5 liter/minute. The pipe (19) is connected to the point (37) and works as an overflow keeping constant the water level in the tank for the entire distribution cycle. The water level makes the floater (7) rise to 6-7 centimeters. This floater is realized by plastic water and sand (22), inserted into it for at least 6-7 centimeters. The movement of the floater pushes up the rod with cork an regulator (5) connected with the cork (6) of the bottle on the regulation point and on the extremity of the rocker arm (4) on the cork end. The rocker arm has his fulcrum at the shaft of the pivot plate (3), the opposite end is hinged at the rod with two corks (9), which in terms is hinged on the end of the level arm (10), positioned on the shaft (11). These are by means of few bolts (13), block the door (12), allowing the opening. The closing comes a few seconds after the distribution cycle is terminated, therefore when the restriction (21), brings the water level of the tank to normal(s). The water level in the bowl (24) is regulated by the floater (28), which controls the valve (29) positioned inside the lower tank (27) and connected to the water plug (30). The level is therefore equal to the tank (8) level. A very important issue, in order to guarantee the proper functioning of the system , is to position at the same elevation the holes (38), (51), (50). The hole 49 positioned at a higher elevation than the preceding holes allows the exceeding water to escape the bowl (24) using the pipe (26). This water comes from the normal distribution cycle, it has already been used to turn the turbine (34) and the float (7). Such a device allows to enrich the water cyclically with oxygen. Another particular is the cover (52), it seals the tank (27) allowing the automatic group of the gate to function the best way. To operate the machine an electrical valve with a digital programmer has been used. The lower energy consumption electrical valve is easily found on the market; the digital programmer (45) sends positive and negative impulses to the opening and closing of the coil (70). This kind of electrical valve is installed in order to control the pressure from 0.5 atm. To 10 atm. Using a complex system of membrane and seals. The scope of the modification is to work with the pressure going from 0 to 0.1 atm. The modification consists in substituting the membrane and seals with a valve (24-25) and relevant brass seats together with a seal (20). From fig. 12 manifold (65) where water comes in, can be clearly seen. Also shown: the manifold (66) where water goes out, the body (67) fig 13, the permanent magnet (68) fig 18, the plate (69) fig 19, the coil (70) fig 17, the seat of the modified valve (71) fig 14. In fig. 13 can be observed the internal part of the valve body (73) where the seat of the valve (72) is shown as it was on its older usage.

In fig 15. We can notice the nucleus with the details of the steel spring (74) on his circular seat. In the older system it used to gather a rubber pin. The essential parts of the modification are shown more clearly in drawing 3/6 where fig. 22 is represented in the seat of the brass valve and in more details in the particular (76); the hole 77 allows the liquid flow when in the open position. A very important detail of fig.23 is the diameter (82), it has the same dimension of diameter (72), see fig. 13, in such a way that the two bodies are connected, one inside the other for pressure or gluing period. In fig.24 we can see the closing valves with the detail (78). In fig.25 we can see again the closing valves with the details (78) and (79), the last one has the external diameter identical to the internal diameter (75). In order to have both parts connected and because of special glue they are locked together as in fig.26, particular (81). In this last figure 26 the particular (80) the seat of the spring can be noticed. Another essential part of the modification is the seal fig.20.The founding can be susceptible to different modifications and changes. It is implicit that different materials and/or dimensions can be varied depending on the needs, also the substitution of technical equivalents can be done to what has been described, without escaping the rights of the invention and the confines of the present patent.

## Claims

1. Automatic distributor of water, fodder, cookies, forage for animals in general and in particular for dogs with a low energetic consumption, characterized by the absence of motors and mechanical parts subject to wear, it operates using only the force of gravity of water.

2. Automatic distributor of water, fodder, cookies, forage for animals in general and in particular for dogs with a low energetic consumption, according to claim 1 characterized by the water flow controlled by an electrical valve with digital programmer purposely modified to allow the operation with pressure's range from 0 to 0.1 atm.

3. Automatic distributor of water, fodder, cookies, forage for animals in general and in particular for dogs with a low energetic consumption, according to the preceding claim, characterized by an electrical valve modified and a relevant brass seat that allows through a spring to a closure capable to keep 0.1 atm. And a sealed gasket.

4. Automatic distributor of water, fodder, cookies, forage for animals in general and in particular for dogs with a low energetic consumption, according to the claims 2 and 3, characterized by the very low energy consumption of both the electrical valve purposely modified and the digital controller; they can work for approximately 7 months with one 9 volts battery charge (type MN1604-6LR61) easily available on the market for the price of 7000 Lit.

5. Automatic distributor of water, fodder, cookies, forage for animals in general and in particular for dogs with a low energetic consumption, according to the preceding claims, characterized by: despite the size changes of the tank and container it is possible to supply different aliments to different users keeping the same energy consumption (9 volts).

6. Automatic distributor of water, fodder, cookies, forage for animals in general and in particular for dogs with a low energetic consumption, according to claim 1 characterized by the particularly advantageous shape of the turbine's blade with edges capable of receiving and containing water up to the movement by the force of gravity and, creating a rotating movement of small and slow clicks.

7. Automatic distributor of water, fodder, cookies, forage for animals in general and in particular for dogs with a low energetic consumption, according to claim 6 characterized by the impossibility of choking because the movement is allowed when the blades are charge at the 7-8% of their capacity, therefore in case of instantaneous blockage there is the possibility of increasing drastically the moving power without loosing the distribution cycles and automatically unblocking without anyone's action.

8. Automatic distributor of water, fodder, cookies, forage for animals in general and in particular for dogs with a low energetic consumption, according to claim 1 characterized by the particular shape of the distribution group that makes the invention particularly efficient in terms of shape, size, position of the openings applied inside a cylinder where rectangular breakings are obtained for the distribution of different kinds of fodder and other solid materials.

9. Automatic distributor of water, fodder, cookies, forage for animals in general and in particular for dogs with a low energetic consumption, according to claim 1 characterized by the particular anti intrusion door situated in the terminal part of the funnel slide where the fodder flow is controlled into the bowl and is put into operation by the equalizer and by the counter weight floating tank to an efficient hydraulic system using the water pressure already used for the movement of the turbines.

10. Automatic distributor of water, fodder, cookies, forage for animals in general and in particular for dogs with a low energetic consumption, according to claim 9 characterized by the water in the bowl being partially substituted and oxygenated at every fodder distribution and especially guaranteed also in absence of water supply.

11. Automatic distributor of water, fodder, cookies, forage for animals in general and in particular for dogs with a low energetic consumption, according to claim 1 characterized by the enclosure of the equipment, built with optimum quality material, insulated and low weight (approximately 40kg) which make it easy to transport. During the operation with the water and fodder it reaches 120 kg becoming a true self standing body and not needing any ground fixing.

12. Automatic distributor of water, fodder, cookies, forage for animals in general and in particular for dogs with a low energetic consumption, according to preceding claims characterized by the possibility of applying at the cover a solar panel of small dimensions to recharge the small battery.

13. Automatic distributor of water, fodder, cookies, forage for animals in general and in particular for dogs with a low energetic consumption, according to preceding claims characterized by the possibility of operating two or more distribution groups to eventually feed more animals. This is possible sizing properly the turbine using an electrical valve and one digital programmer.

14. Automatic distributor of water, fodder, cookies, forage for animals in general and in particular for dogs with a low energetic consumption, according to preceding claims characterized by operation of the turbine that can be done using the water pressure in particular circumstances and if a water supply is available.

15. Automatic distributor of water, fodder, cookies, forage for animals in general and in particular for dogs with a low energetic consumption, according to preceding claims characterized by the possibility of using different types of electrical valves depending on the needs (not modified valve, motorized by the same principal) easily available on the market fed by power coming from electric generators, or solar panels or accumulators.

16. Automatic distributor of water, fodder, cookies, forage for animals in general and in particular for dogs with a low energetic consumption, according to preceding claims characterized by the possibility of storing water in two tanks, upper and lower, connected by a floating valve in order to keep the operation pressure on the electrical valve and therefore on the turbine, to have long reserves and insuring the a constant fodder flow in every distribution cycle also in absence of water supply.

17. Automatic distributor of water, fodder, cookies, forage for animals in general and in particular for dogs with a low energetic consumption, according to preceding claims characterized by the installation of two filters against limestone at the inlet of the two tanks.

18. Automatic distributor of water, fodder, cookies, forage for animals in general and in particular for dogs with a low energetic consumption, according to preceding claims characterized by the installation of a tap allowing to control the water flow on the turbine and the regulation of the quantity of fodder to be delivered.

19. Automatic distributor of water, fodder, cookies, forage for animals in general and in particular for dogs with a low energetic consumption, according to preceding claims characterized by the details, layouts and operations as described in the preceding extended descriptions, by the drawings attached, by the technical equivalents taken as a whole and/or in the different combinations or variations.
